# EUROPÄISCHE PATENTSCHRIFT

(11) **EP 2 337 705 B1**
(45) Veröffentlichungstag und Bekanntmachung des Hinweises auf die Patenterteilung: **27.02.2013**
(21) Anmeldenummer: 08874987.4
(22) Anmeldetag: 23.10.2008
(51) Int. Cl.: B60N 2/20, B60N 2/235, B60N 2/433

(54) **VERRIEGELUNGSVORRICHTUNG, INSBESONDERE FÜR EINEN VERSTELLBESCHLAG UND INSBESONDERE FÜR EINEN FAHRZEUGSITZ, UND FAHRZEUGSITZ**
LOCKING DEVICE, ESPECIALLY FOR AN ADJUSTMENT FITTING AND ESPECIALLY FOR A VEHICLE SEAT, AND VEHICLE SEAT
DISPOSITIF DE VERROUILLAGE, DESTINÉ EN PARTICULIER À UNE FERRURE DE RÉGLAGE EN PARTICULIER POUR UN SIÈGE DE VÉHICULE, ET SIÈGE DE VÉHICULE

(43) Veröffentlichungstag der Anmeldung: 29.06.2011
(73) Patentinhaber: Johnson Controls GmbH, 51399 Burscheid (DE)
(72) Erfinder: KIENKE, Ingo, 42929 Wermelskirchen (DE); WEBER, Frank, 51519 Odenthal (DE); MAHARAJAPURAM, Karthikeyan, S., 51381 Leverkusen (DE)
(74) Vertreter: Schwöbel, Thilo K.
(86) Internationale Anmeldenummer: PCT/EP2008/008978
(87) Internationale Veröffentlichungsnummer: WO 2010/045956

(56) Entgegenhaltungen:
- DE-A1- 4 439 644
- DE-A1-102005 037 832
- US-A1- 2002 089 224

## Beschreibung

Die vorliegende Erfindung betrifft eine Verriegelungsvorrichtung, insbesondere für einen Verstellbeschlag und insbesondere für einen Fahrzeugsitz. Mittels der Verriegelungsvorrichtung ist es möglich, einen Verstellbeschlag zu verriegeln bzw. zu entriegeln, d.h. insbesondere die Verstellung eines ersten Beschlagteils des Verstellbeschlags und eines zweiten Beschlagteils des Verstellbeschlags relativ zueinander zu verriegeln und zu entriegeln.

Verriegelungsvorrichtungen für Fahrzeuge, insbesondere für Fahrzeugsitze, müssen großen Belastungen standhalten, um sich insbesondere in einer Unfallsituation nicht ungewollt zu öffnen (bzw. zu entriegeln) und dadurch eine Gefahr für Fahrzeuginsassen darzustellen. Auf der anderen Seite sollen Verriegelungsvorrichtungen für Fahrzeuge jedoch auch in normalen Benutzungssituationen, d.h. solchen Situationen, in denen keine erhöhten Beschleunigungskräfte auf das Fahrzeug wirken, leicht zu bedienen sein, d.h. insbesondere in einer für einen Benutzer angenehmen Weise beispielsweise zu entriegeln sein. Hierzu wird in den dem Oberbegriff des Anspruchs 1 entsprechenden Druckschrift DE 44 39 644 C2 vorgeschlagen, dass ein Verriegelungssystem für Beschläge von Fahrzeugsitzen ein Betätigungs- und Sicherungsglied aufweist, welches eine Spannfläche und eine Fangfläche aufweist. Da die Spannfläche und die Fangfläche jeweils auf die gleiche Gegenfläche wirken, ergibt sich eine vergleichsweise große Drehbewegung zur Öffnung (bzw. Entriegelung) des Verriegelungssystems. Eine alternative Ausführungsform, bei der die Spannfläche und die Fangfläche des Betätigungs- und Sicherungsgliedes mehrteilig ausgebildet sind, bringt den Nachteil eines erhöhten Fertigungs- und Materialaufwands mit sich.

Der Erfindung liegt daher die Aufgabe zugrunde, eine Verriegelungsvorrichtung zur Verriegelung bzw. Entriegelung eines Verstellbeschlags bereitzustellen, die auf kostengünstige Weise eine sehr gute Sicherung gegen ungewollte bzw. ungesicherte Öffnungsbewegungen bereitstellt und die dennoch leicht entriegelbar ist und schnell und einfach montiert werden kann.

Diese Aufgabe wird gelöst durch eine Verriegelungsvorrichtung, insbesondere für einen Verstellbeschlag und insbesondere für einen Fahrzeugsitz, wobei die Verriegelungsvorrichtung eine um eine erste Drehachse drehbare Verriegelungsnocke und eine um eine zweite Drehachse drehbare Verriegelungsklinke aufweist, wobei die Verriegelungsvorrichtung in eine Verriegelungsstellung und in eine Freigabestellung einstellbar ist, wobei die Verriegelungsnocke einen ersten Verriegelungsbereich und einen ersten Sicherheitsbereich aufweist, wobei die Verriegelungsnocke mit dem ersten Verriegelungsbereich und dem ersten Sicherheitsbereich einstückig vorgesehen ist, wobei die Verriegelungsklinke einen zweiten Verriegelungsbereich und einen zweiten Sicherheitsbereich aufweist, wobei in der Verriegelungsstellung der Verriegelungsvorrichtung der erste und zweite Verriegelungsbereich in Kontakt miteinander vorgesehen sind und wobei in der Verriegelungsstellung der Verriegelungsvorrichtung der erste und zweite Sicherheitsbereich sich gegenüberliegend oder in Kontakt miteinander vorgesehen sind. Hierdurch ist es erfindungsgemäß mit einfachen Mitteln möglich, eine gute und sichere Verriegelung der Verriegelungsvorrichtung zu gewährleisten und dennoch eine leichte Entriegelbarkeit mit einem vergleichsweise einfachen Aufbau und einem vergleichsweise geringen Montageaufwand zu verbinden. Weiterhin wird erfindungsgemäß insbesondere die sogenannte Rückwärtsfestigkeit der Verriegelungsvorrichtung verbessert, weil durch die Verriegelungsbereiche und die Sicherheitsbereiche quasi kein oder ein verringerter Zahnüberdeckungsverlust der Verriegelungsklinke vor allem in Rückwärtsrichtung erfolgt.

Weitere bevorzugte Ausgestaltungen der Erfindung sind in den Unteransprüchen aufgeführt.

Besonders bevorzugt ist es erfindungsgemäß, dass in der Verriegelungsstellung der Verriegelungsvorrichtung der erste und zweite Sicherheitsbereich in einer normalen Benutzungssituation sich gegenüberliegend vorgesehen sind (d.h. in einer normalen Benutzungssituation ein Spalt zwischen dem ersten und zweiten Sicherheitsbereich vorgesehen ist) und in einer Unfallsituation in Kontakt miteinander vorgesehen sind. Weiterhin ist erfindungsgemäß bevorzugt, dass der erste und zweite Verriegelungsbereich einen Verriegelungswinkel aufweist, der zwischen 4° und 6° liegt, bevorzugt zwischen 4,5° und etwa 6°, besonders bevorzugt zwischen 5° und etwa 6°, ganz besonders bevorzugt zwischen etwa 5,2° und etwa 5,7°, bzw. dass der erste und zweite Sicherheitsbereich (falls der Spalt durch eine Belastung geschlossen wird) einen Verriegelungswinkel aufweist, der zwischen 2° und 5,7°, bevorzugt zwischen 2° und etwa 4,5° liegt. Hierdurch ist ein besonders sicherer und zugleich leicht bedienbarer Betrieb der Verriegelungsvorrichtung möglich. Der sich bei Berührung erstellende Verriegelungswinkel im Sicherheitsbereich ist bevorzugt kleiner als der Verriegelungswinkel im Verriegelungsbereich. Bei unterschiedlichen Toleranzgegebenheiten soll jedoch die Größe des Spaltes zwischen den Sicherheitsbereiches nur innerhalb bestimmter Grenzen variieren, damit die Funktionsfähigkeit der Verriegelungsvorrichtung erhalten bleibt.

Weiterhin ist erfindungsgemäß bevorzugt, dass der erste Verriegelungsbereich und der erste Sicherheitsbereich in unterschiedlichen radialen Abständen von der ersten Drehachse vorgesehen sind. Hierdurch ist es erfindungsgemäß vorteilhaft möglich, die Verriegelungsvorrichtung besonders leicht und dennoch stabil zu gestalten. Der Verriegelungsweg bzw. der Entriegelungsweg der Verriegelungsvorrichtung kann damit erfindungsgemäß besonders klein sein.

Besonders bevorzugt ist erfindungsgemäß weiterhin auch, dass der erste Verriegelungsbereich und der erste Sicherheitsbereich bezüglich der ersten Drehachse in unterschiedlichen Sektoren (d.h. radial nebeneinanderliegend entlang des Umfangs) vorgesehen sind. Hierdurch wird gleichzeitig eine Überdeckung sowohl der Verriegelungsbereiche als auch der Sicherheitsbereiche ermöglicht.

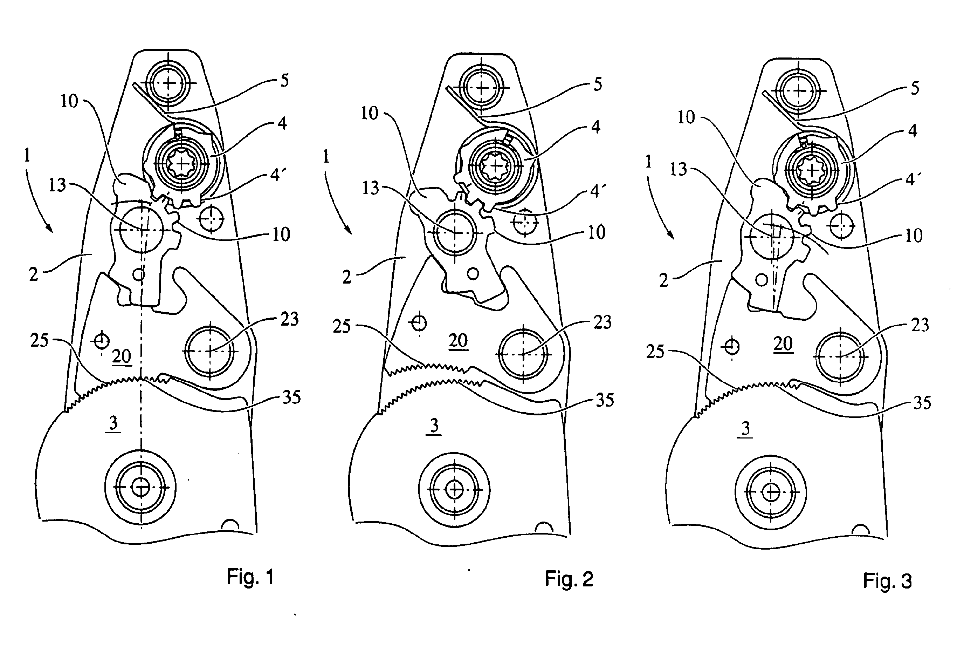

Weiterhin ist erfindungsgemäß bevorzugt, dass der erste und zweite Verriegelungsbereich und der erste und zweite Sicherheitsbereich zum Toleranzausgleich derart vorgesehen sind, dass eine Drehung der Verriegelungsnocke um die erste Drehachse im Bereich von maximal 10° bis 20° vorgesehen ist. Hierbei wird auf die Differenz zwischen den Extremaleinstellungen abgestellt, d. h. zwischen den Situationen für Maximalmaterial und Minimalmaterial (d. h. die Toleranzsituation, die zur maximalen Drehung zur Herbeiführung der Verriegelung in Benutzungssituation führt, vgl, Fig. 3). Beispielsweise kann dies durch ein Toleranzfeld von ± 5° bits ± 100 ausgehend von der Nominalsituation(vgl. Fig. 1) realisiert sein. Hierdurch kann die Herstellung der Einzelteile der Verriegelungsvorrichtung besonders einfach und mit geringen Kosten erfolgen, weil die Anforderungen an die Maßhaltigkeit reduziert werden können.

Ein weiterer Gegenstand der vorliegenden Erfindung betrifft einen Fahrzeugsitz mit einem Sitzteil, mit einem Lehnenteil und mit einem Verstellbeschlag, wobei eine erfindungsgemäße Verriegelungsvorrichtung als Teil des Verstellbeschlags vorgesehen ist.

Ausführungsbeispiele der Erfindung sind in der Zeichnung dargestellt und in der nachfolgenden Beschreibung näher erläutert. Die Figuren schränken den allgemeinen Erfindungsgedanken nicht ein.
Figur 1 zeigt eine erfindungsgemäße Verriegelungsvorrichtung in ihrer Verriegelungsstellung in Seitenansicht.
Figur 2 zeigt eine erfindungsgemäße Verriegelungsvorrichtung in ihrer Freigabestellung in Seitenansicht.
Figur 3 zeigt eine erfindungsgemäße Verriegelungsvorrichtung in ihrer Verriegelungsstellung in Seitenansicht, wobei geringfügig andere Abmessungen von Verriegelungsnocke relativ zu Verriegelungsklinke gegenüber der Darstellung gemäß Figur 1 vorliegen.
Figuren 4 und 5 zeigen Detaildarstellungen der erfindungsgemäßen Verriegelungsvorrichtung.

In den Figuren 1 bis 3 ist eine erfindungsgemäße Verriegelungsvorrichtung 1 in Seitenansicht dargestellt. Die Verriegelungsvorrichtung 1 weist eine Verriegelungsnocke 10 auf, die um eine erste Drehachse 13 drehbar bzw. schwenkbar vorgesehen ist. Die Verriegelungsvorrichtung 1 weist ferner eine Verriegelungsklinke 20 auf, die um eine zweite Drehachse 23 drehbar bzw. schwenkbar vorgesehen ist. Die Verriegelungsvorrichtung 1 ist insbesondere Teil eines Verstellbeschlags (nicht eigens mittels eines Bezugszeichens in den Figuren dargestellt), wobei der Verstellbeschlag insbesondere ein erstes Beschlagteil 2 und ein zweites Beschlagteil 3 umfasst und beispielsweise als Lehnenverstellbeschlag eines Fahrzeugsitzes (nicht dargestellt) vorgesehen ist, wobei ein solcher Fahrzeugsitz relativ zueinander bewegliche Teile aufweist, beispielsweise ein Sitzteil und ein Lehnenteil, und wobei jeweils eines der Beschlagteile 2, 3 an den relativ zueinander beweglichen Teilen des Fahrzeugsitzes angebracht sind. Am ersten Beschlagteil 2 sind dann sowohl die Verriegelungsnocke 10 als auch die Verriegelungsklinke 20 sowie die erste und zweite Drehachse 13, 23 vorgesehen. Erfindungsgemäß ist es insbesondere vorgesehen, dass das erste Beschlagteil 2 an einer Rückenlehne (nicht dargestellt) und das zweite Beschlagteil 3 an einem Sitzteil (nicht dargestellt) oder umgekehrt angebracht ist. Hierbei kann es sich bei dem zweiten Beschlagteil 3 insbesondere um ein lehnenteilseitiges Beschlagelement eines Rückenlehnenverstellbeschlags (sogenannter Recliner) mit einem Taumelgetriebe handeln, d.h. das zweite Beschlagteil 3 muss nicht zwingend sitzteilfest (bzw. sitzteildrehfest) vorgesehen sein. Die Verriegelungsvorrichtung 1 sichert beispielsweise einen Rastbeschlag zur Sitzlehnenverstellung. Hierzu ist beispielsweise die Verriegelungsklinke 20 mit einer ersten Rastverzahnung 25 ausgebildet und es ist das zweite Beschlagteil 3 mit einer zweiten Rastverzahnung 35 ausgebildet. Falls die Rastverzahnung als Rastverzahnung vorgesehen ist, spielt aufgrund der Zahnhöhe der Rastverzahnung (im Gegensatz zu einer in den Figuren dargestellten Rastverzahnung für Verstellinkremente (Komfortverstellinkremente)) die Problematik der Rückwärtsfestigkeit eine eher untergeordnete Rolle. Alternativ hierzu, jedoch nicht dargestellt, kann die Verriegelungsvorrichtung 1 auch zur Verriegelung bzw. Entriegelung eines Fangschlosses im Bereich eines Fahrzeugsitzes, insbesondere zur Verklappung und Einrastung der Rückenlehne oder zur Verklappung und Einrastung des Sitzteils eines Fahrzeugsitzes vorgesehen sein.

Die Verriegelungsvorrichtung 1 ist in eine in Figur 1 dargestellte Verriegelungsstellung und in eine in Figur 2 dargestellte Freigabestellung bzw. Entriegelungsstellung einstellbar. Zwischen der Verriegelungsstellung und der Freigabestellung werden die Verriegelungsnocke 10 um die erste Drehachse 13 und die Verriegelungsklinke 20 um die zweite Drehachse 23 in jeweils gegensinniger Drehrichtung verschwenkt. In der in den Figuren 1 bis 5 gewählten Darstellung wird jeweils die Verriegelungsklinke 20 für die Richtung von der Verriegelungsstellung zur Entriegelungsstellung im Uhrzeigersinn gedreht (und umgekehrt) und es wird die Verriegelungsnocke 10 für die Richtung von der Verriegelungsstellung zur Entriegelungsstellung im Gegenuhrzeigersinn gedreht (und umgekehrt).

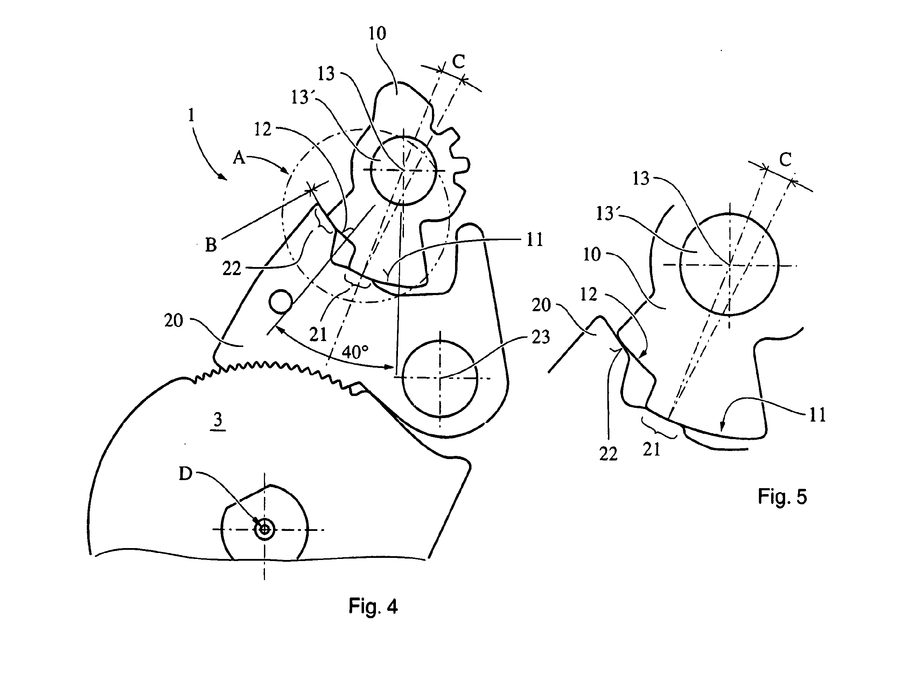

In den Figuren 4 und 5 sind Detaildarstellungen der Verriegelungsvorrichtung 1 bzw. der Verriegelungsnocke 10 und der Verriegelungsklinke 20 für die Einstellung in der Verriegelungsstellung dargestellt, wobei die Figur 5 ein in Figur 4 mit "A" bezeichnetes Detail wiedergibt und wobei in der Figur 4 ein Beispiel einer Rastverzahnung 25, 35 mit Verstellinkrementen dargestellt ist. Bei einer solchen Rastverzahnung kann bereits ein geringfügiges Abheben der Verriegelungsklinke 20 (Drehung in Uhrzeigerrichtung gemäß der Figur 4) zu einer großen Festigkeitsreduzierung, insbesondere für den Fall der Belastung in Rückwärtsrichtung führen, was durch die erfindungsgemäßen Maßnahmen wirksam verringert wird. Die Verriegelungsnocke 10 weist einen ersten Verriegelungsbereich 11 und einen ersten Sicherheitsbereich 12 auf. Der erste Verriegelungsbereich 11 und der erste Sicherheitsbereich 12 ist in Umfangsrichtung um die erste Drehachse 13 im wesentlichen hintereinander angeordnet. Die Verriegelungsklinke 20 weist einen zweiten Verriegelungsbereich 21 und einen zweiten Sicherheitsbereich 22 auf. Der zweite Verriegelungsbereich 21 und der zweite Sicherheitsbereich 22 ist in der Verriegelungsstellung der Verriegelungsklinke 20 in Umfangsrichtung um die erste Drehachse 13 ebenfalls im wesentlichen hintereinander angeordnet. Hierdurch überdecken sich in der Verriegelungsstellung der erste Verriegelungsbereich 11 mit dem zweiten Verriegelungsbereich 21 und der erste Sicherheitsbereich 12 mit dem zweiten Sicherheitsbereich 22. Mit anderen Worten bilden sowohl der erste und zweite Verriegelungsbereich 11, 21 als auch der erste und zweite Sicherheitsbereich 12, 22 jeweils Oberflächen mit Schließkurven. Hierbei ist es erfindungsgemäß vorgesehen, dass sich die Oberflächen des ersten und zweiten Verriegelungsbereichs 11, 21 in der Verriegelungsstellung berühren, d.h. in Kontakt miteinander befindlich sind, und dass sich die Oberflächen des ersten und zweiten Sicherheitsbereichs 12, 22 in der Verriegelungsstellung und in einer normalen Benutzungssituation der Verriegelungsvorrichtung 1 (d.h. ohne dass (beispielsweise unfallbedingte) erhöhte Beschleunigungskräfte zu einer Belastung der Verriegelungsvorrichtung 1 führen) nicht berühren, sondern lediglich in einem bestimmten (vergleichsweise geringen) Abstand gegenüberliegen, was in Figur 4 mit dem Bezugszeichen B bezeichnet ist. Dieser Abstand beträgt erfindungsgemäß beispielsweise etwa 0,1 Millimeter bis etwa 1,0 Millimeter, bevorzugt etwa 0,15 Millimeter bis etwa 0,5 Millimeter, besonders bevorzugt etwa 0,2 Millimeter bis etwa 0,4 Millimeter, ganz besonders bevorzugt etwa 0,24 Millimeter. Der in der Normalsituation vorgesehene Abstand zwischen den gegenüberliegenden Oberflächen der Sicherheitsbereiche 12, 22 hat den Vorteil, dass zwischen den Sicherheitsbereichen 12, 22 (in einer normalen Benutzungssituation) keinerlei Losbrechkräfte aufzubringen sind, um die Verriegelungsvorrichtung 1 in ihre Freigabestellung bzw. Entriegelungsstellung einzustellen. Lediglich im Fall von höheren Belastungen der Verriegelungsvorrichtung 1 kommt es (insbesondere durch Verformung entsprechender belasteter Komponenten bzw. Teile) zu einem Kontakt der Sicherheitsbereiche 12, 22, so dass diese in solchen Situationen zu einer erhöhten Stabilität der Verriegelungsvorrichtung 1 beitragen. Aufgrund der Anordnung der zweiten Drehachse 23 auf einer Seite der lediglich in Figur 4 angedeuteten Verbindungslinie zwischen der ersten Drehachse 13 und der mit dem Bezugszeichen D bezeichneten Drehachse des ersten Beschlagteils 2 um das zweite Beschlagteil 3 ist erfindungsgemäß die Haltekraft der Verriegelungsvorrichtung in einer Kraftrichtung größer als in die andere Kraftrichtung. In den Figuren entspricht beispielsweise eine Drehung des ersten Beschlagteils 2 nach links einer Drehung der Rückenlehne nach vorne; die Festigkeit in dieser Drehrichtung wird auch Vorwärtsfestigkeit genannt. Entsprechend wird die Festigkeit in der entgegengesetzten Drehrichtung Rückwärtsfestigkeit genannt. Erfindungsgemäß wird die Rückwärtsfestigkeit insbesondere durch das Vorsehen der Sicherheitsbereiche gestärkt. In den Figuren ist jeweils der Fall dargestellt, dass der erste und zweite Verriegelungsbereich 11, 21 näher an der Verbindungslinie vorgesehen ist als der Sicherheitsbereich 12, 22. Erfindungsgemäß kann es jedoch auch umgekehrt vorgesehen sein (nicht dargestellt). Insbesondere ist der erste und der zweite Verriegelungsbereich 11, 21 auf der Verbindungslinie zwischen der ersten Drehachse 13 und der Drehachse D des ersten Beschlagteils 2 um das zweite Beschlagteil 3 vorgesehen bzw. die Verbindungslinie schneidet diese Bereiche.

Erfindungsgemäß ist es bevorzugt vorgesehen, dass der erste Verriegelungsbereich 11 und der erste Sicherheitsbereich 12 radial in unterschiedlichen Abständen von der ersten Drehachse 13 befinden (und auch der zweite Verriegelungsbereich 12 und der zweite Sicherheitsbereich 22 entsprechend angeordnet sind). Hierdurch kann eine erhöhte Gesamtstabilität der Verriegelungsvorrichtung 1 realisiert werden.

Es ist erfindungsgemäß vorgesehen, dass die Oberflächen des ersten und zweiten Verriegelungsbereichs 11, 21 (bzw. deren Flächennormalen) derart relativ insbesondere zur ersten Drehachse 13 vorgesehen sind, dass sich ein positiver Verriegelungswinkel zwischen den Verriegelungsbereichen 11, 21 ergibt. Dies ist in Figur 4 und 5 mit dem Bezugszeichen C dargestellt. Der Verriegelungswinkel ist der Winkel zwischen einerseits der Verbindungslinie des Kontaktpunktes (bzw. Berührpunktes) von erstem und zweitem Verriegelungsbereich 11, 21 und andererseits der Flächennormalen des zweiten Verriegelungsbereichs 21. Mit einem positiven Verriegelungswinkel zwischen den Verriegelungsbereichen 11, 21 ergibt sich ein öffnendes Moment zwischen der Verriegelungsnocke und der Verriegelungsklinke 20 im Fall einer Belastung, was zur Erzielung eines möglichst geringen Losbrechmoments (zur Einstellung der Freigabestellung) führt.

Ein weiterer Verriegelungswinkel (in den Figuren nicht dargestellt) liegt auch im Bereich der Sicherheitsbereiche 12, 22 vor. Auch dieser weitere Verriegelungswinkel ist erfindungsgemäß insbesondere positiv ausgebildet. Auch hierdurch kommt es zu einem öffnenden Moment zwischen der Verriegelungsnocke und der Verriegelungsklinke 20 im Fall einer Belastung. Durch Maßnahmen wie die Ausbildung von Rillen bzw. hervorstehende Nasen im Bereich zwischen der Verriegelungsnocke 10 und einem die ersten Drehachse 13 bildenden Zapfen 13' kann das Öffnen der Verriegelungsvorrichtung 1 (bzw. die Einstellung der Freigabestellung) wirksam unterbunden werden.

Zur Einstellung der Freigabestellung ausgehend von der Verriegelungsstellung ist erfindungsgemäß insbesondere ein Stellelement 4 (lediglich in Figur 1 dargestellt) vorgesehen, welches durch eine Feder 5 (lediglich in Figur 1 dargestellt) in eine der Verriegelungsstellung der Verriegelungsnocke 10 entsprechende Position vorgespannt wird. (Diese Richtung, in die das Stellelement 4 durch die Feder 5 vorgespannt ist, entspricht gemäß der Darstellung in den Zeichnungen einer Richtung entgegen des Uhrzeigersinns.) Hierzu weist das Stellelement 4 eine Verzahnung 4' (lediglich in Figur 1 dargestellt) auf, die mit einer Gegenverzahnung 10' (lediglich in Figur 1 dargestellt) der Verriegelungsnocke 10 kämmt.

In Figur 3 ist eine erfindungsgemäße Verriegelungsvorrichtung 1 in Seitenansicht dargestellt, wobei aufgrund der Gesamttoleranzsituation geringfügig andere Abmessungen von Verriegelungsnocke 10 relativ zu Verriegelungsklinke 20 gegenüber der Darstellung gemäß Figur 1 vorliegen. Solche Änderungen der Abmessung ist den herstellungsbedingten Toleranzen zuzuschreiben. Trotz dieser Toleranzen kann erfindungsgemäß eine sichere Verriegelung der Verriegelungsvorrichtung gewährleistet werden.

### Bezugszeichenliste

- 1: Verriegelungsvorrichtung
- 2: erstes Beschlagteil
- 3: zweites Beschlagteil
- 4: Stellelement
- 4': Verzahnung
- 5: Feder
- 10: Verriegelungsnocke
- 10': Gegenverzahnung
- 11: erster Verriegelungsbereich
- 12: erster Sicherheitsbereich
- 13: erste Drehachse
- 13': Zapfen
- 20: Verriegelungsklinke
- 21: zweiter Verriegelungsbereich
- 22: zweiter Sicherheitsbereich
- 23: zweite Drehachse
- 25: erste Rastverzahnung
- 35: zweite Rastverzahnung

- A: Ausschnitt aus Figur 4
- B: Abstand zwischen den Sicherheitsbereichen
- C: Verriegelungswinkel zwischen den Verriegelungsbereichen
- D: Drehachse des ersten Beschlagteils

## Patentansprüche

1. Verriegelungsvorrichtung (1), insbesondere für einen Verstellbeschlag und insbesondere für einen Fahrzeugsitz, wobei die Verriegelungsvorrichtung (1) eine um eine erste Drehachse (13) drehbare Verriegelungsnocke (10) und eine um eine zweite Drehachse (23) drehbare Verriegelungsklinke (20) aufweist, wobei die Verriegelungsvorrichtung (1) in eine Verriegelungsstellung und in eine Freigabestellung einstellbar ist, wobei die Verriegelungsnocke (10) einen ersten Verriegelungsbereich (11) und einen ersten Sicherheitsbereich (12) aufweist, wobei die Verriegelungsnocke (10) mit dem ersten Verriegelungsbereich (11) und dem ersten Sicherheitsbereich (12) einstückig vorgesehen ist, **dadurch gekennzeichnet, dass** die Verriegelungsklinke (20) einen zweiten Verriegelungsbereich (21) und einen zweiten Sicherheitsbereich (22) aufweist, wobei in der Verriegelungsstellung der Verriegelungsvorrichtung (1) der erste und zweite Verriegelungsbereich (11, 21) in Kontakt miteinander vorgesehen sind und wobei in der Verriegelungsstellung der Verriegelungsvorrichtung (1) der erste und zweite Sicherheitsbereich (12, 22) sich gegenüberliegend oder in Kontakt miteinander vorgesehen sind.

2. Verriegelungsvon-ichtung (1) nach Anspruch 1, **dadurch gekennzeichnet, dass** in der Verriegelungsstellung der Verriegelungsvorrichtung (1) der erste und zweite Sicherheitsbereich (12, 22) in einer normalen Benutzungssituation sich gegenüberliegend vorgesehen sind und in einer Unfallsituation in Kontakt miteinander vorgesehen sind.

3. Verriegelungsvorrichtung (1) nach einem der vorhergehenden Ansprüche, **dadurch gekennzeichnet, dass** der erste und zweite Verriegelungsbereich (11, 21) einen Verriegelungswinkel aufweist, der zwischen 4° und etwa 6° liegt, bevorzugt zwischen 4,5° und etwa 6°, besonders bevorzugt zwischen 5° und etwa 6°, ganz besonders bevorzugt zwischen etwa 5,2° und etwa 5,7° .

4. Verriegelungsvorrichtung (1) nach einem der vorhergehenden Ansprüche, **dadurch gekennzeichnet, dass** der erste und zweite Sicherheitsbereich (12, 22) einen Verriegelungswinkel aufweist, der zwischen 2° und etwa 5,7° bzw. zwischen 2 und 4,5° liegt.

5. Verriegelungsvorrichtung (1) nach einem der vorhergehenden Ansprüche, **dadurch gekennzeichnet, dass** der erste Verriegelungsbereich (11) und der erste Sicherheitsbereich (21) in unterschiedlichen radialen Abständen von der ersten Drehachse (13) vorgesehen sind.

6. Verriegelungsvorrichtung (1) nach einem der vorhergehenden Ansprüche, **dadurch gekennzeichnet, dass** der erste Verriegelungsbereich (11) und der erste Sicherheitsbereich (12) bezüglich der ersten Drehachse (13) in unterschiedlichen Sektoren vorgesehen sind.

7. Verriegelungsvorrichtung (1) nach einem der vorhergehenden Ansprüche, **dadurch gekennzeichnet, dass** die Verriegelungsnocke (10) federvorbelastet in die Verriegelungsstellung hin vorgespannt vorgesehen ist.

8. Verriegelungsvorrichtung (1) nach einem der vorhergehenden Ansprüche, **dadurch gekennzeichnet, dass** der erste und zweite Verriegelungsbereich (11, 21) und der erste und zweite Sicherheitsbereich (12, 22) zum Toleranzausgleich derart vorgesehen sind, dass eine Drehung der Verriegelungsnocke (10) um die erste Drehachse (13) um maximal 20° vorgesehen ist, bevorzugt um maximal 15°, besonders bevorzugt um maximal 10°.

9. Fahrzeugsitz mit einem Sitzteil, mit einem Lehnenteil und mit einem Verstellbeschlag, wobei eine Verriegelungsvorrichtung (1) gemäß einem der vorhergehenden Ansprüche als Teil des Verstellbeschlags vorgesehen ist.

## Claims

1. Locking device (1), especially for an adjustment fitting and especially for a vehicle seat, the locking device (1) having a locking cam (10) which can be rotated about a first rotational axis (13) and a locking pawl (20) which can be rotated about a second rotational axis (23), it being possible for the locking device (1) to be set into a locking position and into a release position, the locking cam (10) having a first locking region (11) and a first safety region (12), the locking cam (10) being provided in one piece with the first locking region (11) and the first safety region (12), **characterized in that** the locking pawl (20) has a second locking region (21) and a second safety region (22), the first and second locking regions (11, 21) being provided in the locking position of the locking device (1) so as to be in contact with one another, and the first and second safety regions (12, 22) are provided in the locking position of the locking device (1) so as to lie opposite one another or to be in contact with one another.

2. Locking device (1) according to Claim 1, **characterized in that**, in the locking position of the locking device (1), the first and second safety regions (12, 22) are provided so as to lie opposite one another in a normal use situation and are provided so as to be in contact with one another in an accident situation.

3. Locking device (1) according to one of the preceding claims, **characterized in that** the first and second locking regions (11, 21) have a locking angle which lies between 4° and approximately 6°, preferably between 4.5° and approximately 6°, particularly preferably between 5° and approximately 6°, very particularly preferably between approximately 5.2° and approximately 5.7°.

4. Locking device (1) according to one of the preceding claims, **characterized in that** the first and second safety regions (12, 22) have a locking angle which lies between 2° and approximately 5.7° or between 2 and 4.5°.

5. Locking device (1) according to one of the preceding claims, **characterized in that** the first locking region (11) and the first safety region (21) are provided at different radial spacings from the first rotational axis (13).

6. Locking device (1) according to one of the preceding claims, **characterized in that** the first locking region (11) and the first safety region (12) are provided in different sectors with regard to the first rotational axis (13).

7. Locking device (1) according to one of the preceding claims, **characterized in that** the locking cam (10) is provided in a spring preloaded manner, prestressed into the locking position.

8. Locking device (1) according to one of the preceding claims, **characterized in that** the first and second locking regions (11, 21) and the first and second safety regions (12, 22) are provided for tolerance compensation in such a way that a rotation of the locking cam (10) about the first rotational axis (13) is provided by a maximum of 20°, preferably by a maximum of 15°, particularly preferably by a maximum of 10°.

9. Vehicle seat having a seat part, having a backrest part and having an adjustment fitting, a locking device (1) according to one of the preceding claims being provided as part of the adjustment fitting.

## Revendications

1. Dispositif de verrouillage (1), destiné en particulier à une ferrure de réglage et en particulier à un siège de véhicule, dans lequel le dispositif de verrouillage (1) présente une came de verrouillage (10) pouvant tourner autour d'un premier axe de rotation (13) et un cliquet de verrouillage (20) pouvant tourner autour d'un deuxième axe de rotation (23), dans lequel le dispositif de verrouillage (1) peut être réglé dans une position de verrouillage et dans une position de libération, dans lequel la came de verrouillage (10) présente une première zone de verrouillage (11) et une première zone de sécurité (12), dans lequel la came de verrouillage (10) est prévue d'une seule pièce avec la première zone de verrouillage (11) et avec la première zone de sécurité (12), **caractérisé en ce que** le cliquet de verrouillage (20) présente une deuxième zone de verrouillage (21) et une deuxième zone de sécurité (22), dans lequel, dans la position de verrouillage du dispositif de verrouillage (1), la première et la deuxième zones de verrouillage (11, 21) sont prévues en contact l'une avec l'autre et dans lequel, dans la position de verrouillage du dispositif de verrouillage (1), la première et la deuxième zones de sécurité (12, 22) sont prévues en face l'une de l'autre ou en contact l'une avec l'autre.

2. Dispositif de verrouillage (1) selon la revendication 1, **caractérisé en ce que**, dans la position de verrouillage du dispositif de verrouillage (1), la première et la deuxième zones de sécurité (12, 22) sont prévues l'une en face de l'autre dans une situation d'utilisation normale et en contact l'une avec l'autre dans une situation d'accident.

3. Dispositif de verrouillage (1) selon l'une quelconque des revendications précédentes, **caractérisé en ce que** la première et la deuxième zones de verrouillage (11, 21) présentent un angle de verrouillage qui se situe entre 4° et environ 6°, de préférence entre 4,5° et environ 6°, de préférence encore entre 5° et environ 6°, et de toute préférence encore entre environ 5,2° et environ 5,7°.

4. Dispositif de verrouillage (1) selon l'une quelconque des revendications précédentes, **caractérisé en ce que** la première et la deuxième zones de sécurité (12, 22) présentent un angle de verrouillage, qui se situe entre 2° et environ 5,7° ou entre 2° et 4,5°.

5. Dispositif de verrouillage (1) selon l'une quelconque des revendications précédentes, **caractérisé en ce que** la première zone de verrouillage (11) et la première zone de sécurité (21) sont prévues à des distances radiales différentes par rapport au premier axe de rotation (13).

6. Dispositif de verrouillage (1) selon l'une quelconque des revendications précédentes, **caractérisé en ce que** la première zone de verrouillage (11) et la première zone de sécurité (12) sont prévues dans des secteurs différents par rapport au premier axe de rotation (13).

7. Dispositif de verrouillage (1) selon l'une quelconque des revendications précédentes, **caractérisé en ce que** la came de verrouillage (10) est prévue avec une précontrainte appliquée par un ressort agissant en direction de la position de verrouillage.

8. Dispositif de verrouillage (1) selon l'une quelconque des revendications précédentes, **caractérisé en ce que** la première et la deuxième zones de verrouillage (11, 21) et la première et la deuxième zones de sécurité (12, 22) sont prévues pour la compensation des tolérances, de telle manière qu'une rotation de la came de verrouillage (10) autour du premier axe de rotation (13) soit prévue avec un maximum de 20 ° , de préférence un maximum de 15 ° , et de préférence encore un maximum de 10°.

9. Siège de véhicule avec une partie d'assise, une partie de dossier et avec une ferrure de réglage, dans lequel il est prévu un dispositif de verrouillage (1) selon l'une quelconque des revendications précédentes comme partie de la ferrure de réglage.
